# EUROPEAN PATENT APPLICATION

(11) **EP 4 002 311 A1**
(43) Date of publication of application: **25.05.2022**
(21) Application number: 21208940.3
(22) Date of filing: 18.11.2021
(51) Int. Cl.: G07C 9/00

(54) **CONTROL METHOD FOR PREVENTING ACCIDENTAL TRIGGERING OF REMOTE CONTROL KEY OF AUTOMOBILE, AND AUTOMOBILE**

(30) Priority: 20.11.2020 CN 202011314856
(71) Applicant: Nio Technology (Anhui) Co., Ltd, Hefei City, Anhui 230601 (CN)
(72) Inventor: ZHANG, Xihan, Shanghai, 201805 (CN); DING, Qianchuang, Shanghai, 201805 (CN)
(74) Representative: Vossius & Partner Patentanwälte Rechtsanwälte mbB

(57) **Abstract**

The invention pertains to the technical field of automobiles, and particularly provides a control method for preventing accidental triggering of a remote control key of an automobile, and an automobile. The invention is to solve the problem of a corresponding function being triggered due to an accidental press on an existing remote control key of an automobile. To this end, the remote control key of the automobile according to the invention includes a remote control button, where the control method includes: receiving a press signal from the remote control button; determining the number of press signals; and selectively enabling a function of a remote control instruction of the automobile based on the number of press signals. The invention does not rely on a hardware design, but uses a software-based strategy to prevent a corresponding function of a remote control instruction from being enabled when an accidental press on the remote control key button of the automobile is caused by a styling design of the automobile key, etc. This lowers a requirement on a hardware structural design of the remote control key, so that the styling design of the remote control key is more flexible.

## Description

### Technical Field

The invention pertains to the technical field of automobiles, and particularly provides a control method for preventing accidental triggering of a remote control key of an automobile, and an automobile.

### Background Art

With the development of science and technology, an automobile has become a common means of modern transport. An automobile key has also evolved from a traditional mechanical key into a remote control key capable of remote control. The remote control key is mainly used for the remote control of locking and unlocking the doors and of other additional functions.

At present, with the innovation in automobile styling, automobile keys tend to be bolder and smarter in design. The styling and structural design of some keys cannot avoid, in terms of hardware structure, a risk of key buttons being accidentally pressed during use. However, a corresponding function of an automobile is usually enabled with only one press on a remote control key of the automobile. Therefore, the automobile often enables the corresponding function due to an accidental operation on the automobile key by a user. For example, if the user puts the key together with other objects and an action of the user causes the key to be pressed by the other objects, the key unlocks the automobile or opens the tailgate and then lowers the window without the knowledge of the user, which may cause a property theft.

Accordingly, a new control method for preventing accidental triggering of a remote control key of an automobile and an automobile are required in the art to solve the problem of a corresponding function being triggered by an accidental press on an existing remote control key of an automobile.

### Summary of the Invention

To solve the foregoing problem in the prior art, that is, to solve the problem of a corresponding function being triggered due to an accidental press on an existing remote control key of an automobile, the invention provides a control method for preventing accidental triggering of a remote control key of an automobile, the method including: receiving a press signal from the remote control button; determining the number of press signals; and selectively enabling a function of a remote control instruction of the automobile based on the number of press signals.

In a preferred technical solution of the control method for preventing accidental triggering of a remote control key of an automobile, the step of "selectively controlling to enable a function of a remote control instruction of the automobile based on the number of press signals" further includes: controlling, when there are two press signals, to enable the function of the remote control instruction of the automobile.

In a preferred technical solution of the control method for preventing accidental triggering of a remote control key of an automobile, the step of "controlling, when there are two press signals, to enable the function of the remote control instruction of the automobile" further includes: when there are two press signals, obtaining a time interval t1 between the two press signals; comparing t1 with T1; and controlling, when t1 ≤ T1, to enable the function of the remote control instruction of the automobile, where T1 is a preset time interval.

In a preferred technical solution of the control method for preventing accidental triggering of a remote control key of an automobile, the step of "controlling, when t1 ≤ T1, to enable the function of the remote control instruction of the automobile" further includes: when t1 ≤ T1, obtaining a press time ΔT1 of the first press signal and a press time ΔT2 of the second press signal; and when ΔT1 ≤ T2 and ΔT2 > T2, or when ΔT1 > T2 and ΔT2 ≤ T2, or when ΔT1 ≤ T2 and ΔT2 ≤ T2, or when ΔT1 > T2 and ΔT2 > T2, controlling to enable the function of the remote control instruction of the automobile, where T2 is a preset press time.

In a preferred technical solution of the control method for preventing accidental triggering of a remote control key of an automobile, the step of "selectively controlling to enable a function of a remote control instruction of the automobile based on the number of press signals" further includes: controlling, when there are less than two press signals, to enable the function of the remote control instruction of the automobile.

In a preferred technical solution of the control method for preventing accidental triggering of a remote control key of an automobile, after the step of "comparing t1 with T1", the control method further includes: controlling, when t1 > T1, to skip enabling the function of the remote control instruction of the automobile.

In a preferred technical solution of the control method for preventing accidental triggering of a remote control key of an automobile, the function of the remote control instruction of the automobile includes one or more of a tailgate opening function, a tailgate closing function, a fuel filler flap opening function, a charging port cover opening port function, a fuel filler flap closing function, a charging port cover closing function, a car door locking function, a car door unlocking function, a car finder function, a window closing function, a window opening function, and a vehicle ignition function.

In a preferred technical solution of the control method for preventing accidental triggering of a remote control key of an automobile, the press signal from the remote control button is sent from a same remote control button.

In a preferred technical solution of the control method for preventing accidental triggering of a remote control key of an automobile, the press signal from the remote control button is sent from different remote control buttons.

The invention further provides an automobile, where the automobile includes a remote control key of the automobile, and the automobile is configured to perform the control method according to any one of the foregoing technical solutions.

Those skilled in the art can understand that, in the technical solutions of the invention, the remote control key of the automobile includes a remote control button, and the control method includes: receiving a press signal from the remote control button; determining the number of press signals; and selectively enabling a function of a remote control instruction of the automobile based on the number of press signals.

In the prior art, a function of a remote control instruction of an automobile can be enabled with only one short press on a remote control key. In contrast, the automobile according to the invention can selectively enable a function of a remote control instruction of the automobile only by determining the number of press signals, thereby reducing a probability that a key button is accidentally pressed due to a styling design of an automobile key, etc.

### Brief Description of the Drawings

A control method for preventing accidental triggering of a remote control key of an automobile in the invention is described below with reference to the drawings. In the drawings:
FIG. 1 is a schematic diagram of main steps of a control method for preventing accidental triggering of a remote control key of an automobile according to the invention;
FIG. 2 is a schematic diagram 1 of further steps of the control method for preventing accidental triggering of a remote control key of an automobile according to the invention; and
FIG. 3 is a schematic diagram 2 of further steps of the control method for preventing accidental triggering of a remote control key of an automobile according to the invention.

### Detailed Description of Embodiments

Preferred embodiments of the invention are described below with reference to the drawings. It should be understood by those skilled in the art that these embodiments are only for explaining the technical principles of the invention and are not intended to limit the scope of protection of the invention. Those skilled in the art can make adjustments according to requirements so as to adapt to specific application scenarios. For example, although it is described in this specification that when there are two press signals, a function of a remote control instruction of an automobile is controlled to be enabled, another number of press signals can be obviously used in the invention, provided that the number is not 1.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, may mean a fixed connection, a detachable connection or an integral connection; may mean a mechanical connection or an electrical connection; and may mean a direct connection, an indirect connection by means of an intermediary, or internal communication between two elements. For those skilled in the art, the specific meaning of the above-mentioned terms in the invention can be interpreted according to the specific situation.

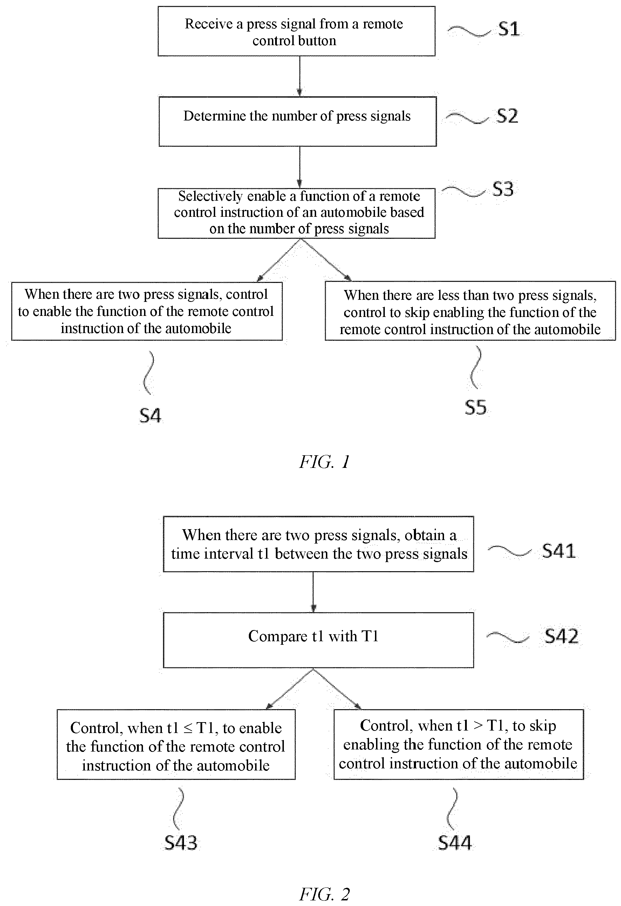

As shown in FIG. 1, to solve the problem of a corresponding function being triggered due to an accidental press on an existing remote control key of an automobile, a remote control key of an automobile according to the invention includes a remote control button, and a control method for preventing accidental triggering of a remote control key of an automobile includes: receiving a press signal from the remote control button; determining the number of press signals; and selectively enabling a function of a remote control instruction of the automobile based on the number of press signals.

In the prior art, a function of a remote control instruction of an automobile can be enabled with only one short press on a remote control key. In contrast, the automobile according to the invention can selectively enable a function of a remote control instruction of the automobile only by determining the number of press signals, to prevent a corresponding function of a remote control instruction from being enabled when the remote control key button of the automobile is accidentally pressed. The invention does not rely on a hardware design, but uses a software-based strategy to reduce a risk of accidental triggering of a function caused by an accidental press on the remote control key. This lowers a requirement on a hardware structural design of the remote control key, so that a styling design of the remote control key is more flexible.

Still referring to FIG. 1, the control method for preventing accidental triggering of a remote control key of an automobile in the invention specifically includes the following steps.

Step S 1: Receive a press signal from the remote control button.

The automobile of the invention first needs to receive a radio frequency press signal transmitted by the remote control key, where a receiving unit for receiving the press signal may be a receiving unit of the automobile.

Step S2: Determine the number of press signals.

After receiving the press signal from the remote control button, the automobile of the invention determines the number of received press signals by using a remote control unit, where the number of press signals corresponds to the number of times the user presses a button of the remote control key.

Step S3: Selectively enable a function of a remote control instruction of the automobile based on the number of press signals.

The automobile of the invention has a central processing unit in such a way that the central processing unit can parse the number of press signals to obtain a specific function of a remote control instruction, and then control the automobile to perform a corresponding operation of the specific function.

Still referring to FIG. 1, step S3 of the invention further specifically includes the following steps.

Step S4: Control, when there are two press signals, to enable the function of the remote control instruction of the automobile.

A condition for controlling the function of the remote control instruction of the automobile to be enabled is that there are two press signals. Since a probability of one accidental press is much lower than a probability of no accidental press, a probability of two accidental presses is even lower. Therefore, adding one press signal can reduce the probability of the remote control key of the automobile being accidentally triggered. In addition, because a remote control key of an existing automobile is usually provided with a plurality of function buttons, and a remote control instruction can be executed only when a specified function button is pressed during the second press, the control method can further reduce a probability of a button being accidentally triggered.

Step S5: Control, when there less than are two press signals, to skip enabling the function of the remote control instruction of the automobile.

The foregoing control method prevents the function of the remote control instruction of the automobile from being controlled to be enabled when the remote control key button is pressed once, thereby preventing its function from being accidentally triggered.

As shown in FIG. 2, step S4 further includes the following steps, where T1 in the following steps is a preset time interval.

Step S41: When there are two press signals, obtain a time interval t1 between the two press signals.

Step S42: Compare t1 with T1.

Step S43: Control, when t1 ≤ T1, to enable the function of the remote control instruction of the automobile.

When t1 ≤ T1, that is, the obtained time interval between the two press signals is less than the preset time interval, the function of the remote control instruction of the automobile is controlled to be enabled. In the control method, an upper limit is set for the time interval between two presses, such that the function of the remote control instruction of the automobile can be enabled only when the remote control key button of the automobile is consecutively pressed twice within a specific time range. The control method further increases condition limitations and makes it more similar to a normal actual operation scenario, which can further reduce the probability of the remote control key of the automobile being accidentally triggered. Two presses beyond a specific preset time interval are very likely to be caused by two accidental presses, for example, the key is pressed twice in a bag. Generally, the time interval is longer than a time of two presses during a normal operation. As a preferred implementation, the preset time interval T1 is 3 seconds, that is, the function of the remote control instruction of the automobile is enabled only when the button is pressed again within 3 seconds after the button is pressed for the first time.

Step S44: Control, when t1 > T1, to skip enabling the function of the remote control instruction of the automobile.

Normally, the probability of the remote control key button of the automobile being consecutively pressed twice is relatively low. Therefore, if the remote control key button of the automobile is pressed for the second time beyond the preset time interval (i.e., non-consecutive presses), it is determined that the press is an accidental press. In this case, the function of the remote control instruction of the automobile is controlled not to be enabled.

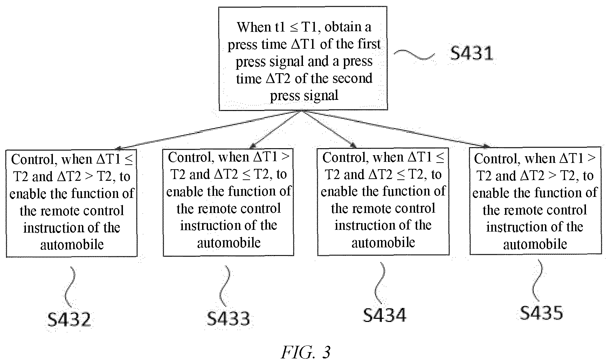

As shown in FIG. 3, step S43 further includes the following steps, where T2 in the following steps is a preset press time.

Step S431: When t1 ≤ T1, obtain a press time ΔT1 of the first press signal and a press time ΔT2 of the second press signal.

Step S432: Control, when ΔT1 ≤ T2 and ΔT2 > T2, to enable the function of the remote control instruction of the automobile.

When ΔT1 ≤ T2 and ΔT2 > T2, that is, the obtained press time of the first press signal is less than the preset press time, and the obtained press time of the second press signal is greater than the preset press time, to be specific, if a time ΔT1 when the button of the remote control key is pressed is less than or equal to the preset press time T2, the remote control unit of the automobile may identify the signal as a short-press signal; when the button of the remote control key is pressed again within a time interval between two press signals that is less than the preset time interval, and if a time ΔT2 when the button of the remote control key is pressed is greater than the preset press time T2, the remote control unit of the automobile may identify the signal as a long-press signal. Then, the remote control unit of the automobile parses a time sequence combination of the short-press signal and the long-press signal, and controls, by using a parsing result, to enable a corresponding function of a remote control instruction of the automobile.

Step S433: Control, when ΔT1 > T2 and ΔT2 ≤ T2, to enable the function of the remote control instruction of the automobile.

When ΔT1 > T2 and ΔT2 ≤ T2, to be specific, if a time ΔT1 when the button of the remote control key is pressed is greater than the preset press time T2, the remote control unit of the automobile may identify the signal as a long-press signal; when the button of the remote control key is pressed again within a time interval between two press signals that is less than the preset time interval, and if a time ΔT2 when the button of the remote control key is pressed is less than or equal to the preset press time T2, the remote control unit of the automobile may identify the signal as a short-press signal. Then, the remote control unit of the automobile parses a time sequence combination of the long-press signal and the short-press signal, and controls, by using a parsing result, to enable a corresponding a function of a remote control instruction of the automobile.

Step S434: Control, when ΔT1 ≤ T2 and ΔT2 ≤ T2, to enable the function of the remote control instruction of the automobile.

When ΔT1 ≤ T2 and ΔT2 ≤ T2, to be specific, if a time ΔT1 when the button of the remote control key is pressed is less than or equal to the preset press time T2, the remote control unit of the automobile may identify the signal as a short-press signal; when the button of the remote control key is pressed again within a time interval between two press signals that is less than the preset time interval, and if a time ΔT2 when the button of the remote control key is pressed is less than or equal to the preset press time T2, the remote control unit of the automobile may identify the signal as a short-press signal. Then, the remote control unit of the automobile parses a time sequence combination of the short-press signal and the short-press signal, and controls, by using a parsing result, to enable a corresponding a function of a remote control instruction of the automobile.

Step S435: Control, when ΔT1 > T2 and ΔT2 > T2, to enable the function of the remote control instruction of the automobile.

When ΔT1 > T2 and ΔT2 > T2, to be specific, if a time ΔT1 when the button of the remote control key is pressed is greater than the preset press time T2, the remote control unit of the automobile may identify the signal as a long-press signal; when the button of the remote control key is pressed again within a time interval between two press signals that is less than the preset time interval, and if a time ΔT2 when the button of the remote control key is pressed is greater than the preset press time T2, the remote control unit of the automobile may identify the signal as a long-press signal. Then, the remote control unit of the automobile parses a time sequence combination of the long-press signal and the long-press signal, and controls, by using a parsing result, to enable a corresponding a function of a remote control instruction of the automobile.

In short, when t1 ≤ T1, a manner of controlling to enable the corresponding function of the remote control instruction of the automobile includes: the time sequence combination of the short-press signal and the long-press signal, or the time sequence combination of the long-press signal and the short-press signal, or the time sequence combination of the long-press signal and the long-press signal, or the time sequence combination of the short-press signal and the short-press signal. As a preferred implementation, when ΔT1 > T2 and ΔT2 ≤ T2, the preset press time T2 is 1.5 seconds.

Advantages of the foregoing control method are as follows: Since a probability of the remote control key of the automobile being accidentally pressed is random when the key is used or carried, the time interval between two presses and the time when the button is pressed twice are also random. Therefore, after a specific press time of the button and a time interval parameter between two presses of the button are specified, even if the button of the remote control key is accidentally pressed, it is difficult to cause the function of the remote control instruction of the automobile to be enabled.

In a possible implementation, the function of the remote control instruction of the automobile in step S3 includes one or more of a tailgate opening function, a tailgate closing function, a fuel filler flap opening function, a charging port cover opening port function, a fuel filler flap closing function, a charging port cover closing function, a car door locking function, a car door unlocking function, a car finder function, a window closing function, a window opening function, and a vehicle ignition function.

Normally, commonly used function buttons of the remote control key of the automobile are an unlock button, a lock button, a tailgate button, and a car finder button. The function of the remote control instruction in the control method of the invention may be set to a remote control instruction of a general function button, or may be set according to actual needs.

In a possible implementation, the press signal from the remote control button in steps S1 to S3 is sent from a same remote control button.

Normally, there is an icon corresponding to the remote control instruction on the remote control button of the automobile. Therefore, the user can press a corresponding icon to trigger a corresponding press signal, that is, the press signal is sent by a same remote control button, which can provide convenience for an operation by the user.

In a possible implementation, to satisfy more diverse design requirements, the press signal from the remote control button in steps S1 to S3 is sent from different remote control buttons.

Based on the foregoing embodiments of the control method for preventing accidental triggering of a remote control key of an automobile, the invention further provides an automobile, where the automobile includes a remote control key of the automobile, and the automobile is configured to perform the control method according to any one of the foregoing embodiments.

In conclusion, according to the control method of the invention, determination is performed based on the number of press signals from the remote control button. Specifically, the determination is performed based on the first press time and the second press time of the button and the time interval between the first press and the second press on the button, and a determination result is analyzed and then the function of the remote control instruction of the automobile is selectively enabled. The implementation thereof is as follows: Within a preset time interval between the first press and the second press of the button, the short-press signal and the long-press signal are arranged and combined according to an operation sequence. When the combined press signals reach preset parameters, the function of the remote control instruction of the automobile is enabled, otherwise the function of the remote control instruction of the automobile is not enabled. The invention uses a software-based strategy to reduce a risk of accidental triggering of a function caused by an accidental press on the remote control key of the automobile.

It should be noted that the foregoing implementations are only used to explain the principles of the invention, and are not intended to limit the scope of protection of the invention. Those skilled in the art can adjust the foregoing structures without departing from the principle of the invention, so that the invention is applicable to more specific application scenarios.

For example, in an alternative implementation, the number of press signals is not necessarily 2, but may also be 3, 4, etc., which do not depart from the principle of the invention and therefore shall all fall within the scope of protection of the invention.

Heretofore, the technical solutions of the invention have been described in conjunction with the preferred embodiments shown in the drawings, however, those skilled in the art can readily understand that the scope of protection of the invention is obviously not limited to these specific embodiments. Those skilled in the art could make equivalent changes or substitutions to the related technical features without departing from the principles of the invention, and all the technical solutions after the changes or the substitutions fall within the scope of protection of the invention.

## Claims

1. A control method for preventing accidental triggering of a remote control key of an automobile, the remote control key of the automobile comprising a remote control button, wherein the control method comprises:
receiving a press signal from the remote control button;
determining the number of press signals; and
selectively enabling a function of a remote control instruction of the automobile based on the number of press signals.

2. The control method for preventing accidental triggering of a remote control key of an automobile according to claim 1, wherein the step of "selectively controlling to enable a function of a remote control instruction of the automobile based on the number of press signals" further comprises:
controlling, when there are two press signals, to enable the function of the remote control instruction of the automobile.

3. The control method for preventing accidental triggering of a remote control key of an automobile according to claim 2, wherein the step of "controlling, when there are two press signals, to enable the function of the remote control instruction of the automobile" further comprises:
when there are two press signals, obtaining a time interval t1 between the two press signals;
comparing t1 with T1; and
controlling, when t1 ≤ T1, to enable the function of the remote control instruction of the automobile,
wherein T1 is a preset time interval.

4. The control method for preventing accidental triggering of a remote control key of an automobile according to claim 3, wherein the step of "controlling, when t1 ≤ T1, to enable the function of the remote control instruction of the automobile" further comprises:
when t1 ≤ T1, obtaining a press time ΔT1 of the first press signal and a press time ΔT2 of the second press signal; and
when ΔT1 ≤ T2 and ΔT2 > T2, or when ΔT1 > T2 and ΔT2 ≤ T2, or when ΔT1 ≤ T2 and ΔT2 ≤ T2, or when ΔT1 > T2 and ΔT2 > T2, controlling to enable the function of the remote control instruction of the automobile,
wherein T2 is a preset press time.

5. The control method for preventing accidental triggering of a remote control key of an automobile according to claim 1, wherein the step of "selectively controlling to enable a function of a remote control instruction of the automobile based on the number of press signals" further comprises:
controlling, when there are less than two press signals, to enable the function of the remote control instruction of the automobile.

6. The control method for preventing accidental triggering of a remote control key of an automobile according to claim 3, wherein after the step of "comparing t1 with T1", the control method further comprises:
controlling, when t1 > T1, to skip enabling the function of the remote control instruction of the automobile.

7. The control method for preventing accidental triggering of a remote control key of an automobile according to claim 1, wherein the function of the remote control instruction of the automobile comprises one or more of a tailgate opening function, a tailgate closing function, a fuel filler flap opening function, a charging port cover opening port function, a fuel filler flap closing function, a charging port cover closing function, a car door locking function, a car door unlocking function, a car finder function, a window closing function, a window opening function, and a vehicle ignition function.

8. The control method for preventing accidental triggering of a remote control key of an automobile according to claim 1, wherein the press signal from the remote control button is sent from a same remote control button.

9. The control method for preventing accidental triggering of a remote control key of an automobile according to claim 1, wherein the press signal from the remote control button is sent from different remote control buttons.

10. An automobile, wherein the automobile comprises a remote control key of the automobile, and the automobile is configured to perform the control method according to any one of claims 1 to 9.
